(19) Europäisches Patentamt
European Patent Office
Office européen des brevets

(11) EP 0 297 576 B2

(12) # NEUE EUROPÄISCHE PATENTSCHRIFT

(45) Veröffentlichungstag und Bekanntmachung des Hinweises auf die Entscheidung über den Einspruch:
**14.07.1999 Patentblatt 1999/28**

(45) Hinweis auf die Patenterteilung:
**29.01.1992 Patentblatt 1992/05**

(21) Anmeldenummer: **88110471.5**

(22) Anmeldetag: **30.06.1988**

(51) Int Cl.[6]: **C09D 175/06**, B05D 1/38, C08L 75/00

(54) **Verfahren zur Herstellung eines Mehrschichtüberzuges und hierfür geeignetes wässriges Überzugsmittel**

Method for manufacturing a multilayer coating, and aqueous dispersion suitable for this process

Procédé pour produire un revêtement multicouche et agent de revêtement aqueux adapté

(84) Benannte Vertragsstaaten:
**AT BE CH DE ES FR GB IT LI NL SE**

(30) Priorität: **03.07.1987 DE 3722005**

(43) Veröffentlichungstag der Anmeldung:
**04.01.1989 Patentblatt 1989/01**

(73) Patentinhaber: **Herberts Gesellschaft mit beschränkter Haftung**
**42285 Wuppertal (DE)**

(72) Erfinder:
- **Patzschke, Hans-Peter, Dr.**
  **D-5600 Wuppertal 2 (DE)**
- **Göbel, Armin**
  **D-5600 Wuppertal 2 (DE)**
- **Meier, Hans Ulrich, Dr.**
  **D-4300 Essen 18 (DE)**

(74) Vertreter: **Türk, Gille, Hrabal**
**Patentanwälte - European Patent Attorneys,**
**Brucknerstrasse 20**
**40593 Düsseldorf (DE)**

(56) Entgegenhaltungen:
**EP-A- 0 089 497**
**EP-A- 0 189 945**
**DE-A- 1 953 348**
**DE-A- 2 363 307**
**GB-A- 2 170 501**
**US-A- 4 318 833**
**US-A- 4 373 053**

- **Lehrbuch der Lacke und Beschichtungen, H.Kittel, Bd. IV, Verlag W.A.Colomb in der Heenemann GmbH, Berlin 1976, S.359**

Bemerkungen:
Die Akte enthält technische Angaben, die nach dem Eingang der Anmeldung eingereicht wurden und die nicht in dieser Patentschrift enthalten sind.

EP 0 297 576 B2

Printed by Jouve, 75001 PARIS (FR)

## Beschreibung

Die Erfindung betrifft ein Verfahren zur Herstellung eines Mehrschichtüberzuges mit wäßrigen nichtvergilbenden Überzugsmitteln bzw. Beschichtungsmassen. Diese können als wasserverdünnbare Uni- oder Metallicbasecoats eingesetzt und überlicherweise mit einem wasserverdünnbaren oder in organischen Lösemitteln gelösten Klarlack überspritzt werden. Die verwendeten Bindemittel sind als Industrielacke besonder z.B. in der Autoindustrie, einsetzbar. Sie führen zu Überzügen, die neben einem guten optischen Effekt und ausgezeichneten mechanischen Eigenschaften eine gute Zwischenhaftung ergeben. ein geringes Anquellverhalten gegenüber Wasser zeigen und störungsfrei durch elektrostatisches Verspritzen aufgetragen werden können. Sie sind außerdem für Reparaturzwecke geeignet, da sie schon nach Härten bei niedrigen Temperaturen, wie 80° C, zu ausgezeichneten Eigenschaften führen.

Es ist bekannt, Substrate mit mehreren übereinander angeordneten Überzugsschichten zu versehen, um Überzüge mit guter dekorativer Wirkung und gleichzeitig guten Schutzeigenschaften zu erhalten. So werden Mehrschichtlackierungen bevorzugt nach dem sogenannten "Basecoat-Clearcoat"-Verfanren aufgebracht. Der zunächst aufgetragene pigmentierte Basislack wird nach kurzer Ablüftzeit ohen Einbrennschritt im "Naß in Naß"-Verfahren mit einem Klarlack überlackiert. Beide Schichten werden dann zusammen eingebrannt. Nach diesem Verfahren werden bevorzugt Metalleffektlacke in der Automobil-Industrie verarbeitet. Auf Grund der Basislack-Zusammensetzung werden dabei sehr hohe Lösemittelanteile verbraucht. Es bestand daher die Aufgabe, ein solches Lacksystem auf eine wasserverdünnbare Basis umzustellen.

Ein solches Bindemittel muß

- durch elektrostatisches Verspritzen mit z.B. Hochrotationglocken störungsfrei aufgetragen werden können;
- "Naß in Naß" mit konventionellen oder wasserverdünnbaren Klarlacken überspritzbar sein, d.h. es sollten trotz möglichst kurzer Ablüftzeit und/oder möglichst kurzer Aufwärmzeit keine störenden Anlöseerscheinungen durch die (transparente) Deckschicht zu beobachten sein;
- die Metalleffekt-Pigmente räumlich orientieren und fixieren, um einen guten optischen Effekt zu erzielen;
- für Reparaturzwecke schon nach Härten bei niedriger Temperatur, wie 80 °C, zu Filmen mit ausgezeichneten mechanischen Eigenschaften führen, die gemeinsam mit dem Klarlack äußerst bewitterungsbeständig sind.

Bei der Entwicklung derartiger wasserverdünnbarer Systeme, treten schwer zu lösende Probleme auf, die auf die besonderen Eigenschaften des Wassers zurückzuführen sind und die gewünschten niedrigen Erwärmungstemperaturen, bei denen praktisch noch keine Vernetzungsreaktionen ablaufen. Es wurde in der Vergangenheit versucht zu geeigneten wasserverdünnbaren Systemen zu gelangen, jedoch ließen sich bisher nicht alle gewünschten Eigenschaften in einem Bindemittel optimal vereinen.

In der DE-OS 28 60 661 werden wasserverdünnbare Bindemittel auf Acrylatbasis beschrieben, die Polymermikroteilchen enthalten, die in nicht-wässrigen Lösemitteln und Wasser unlöslich sind. Sie werden mit Hilfe von sterischen Dispersionsstabilisatoren durch Polymerisation in nicht-wässrigen Lösemitteln hergestellt und anschließend in das wäßrige Medium übergeführt. Diser Umwandlungsprozeß ist sehr aufwendig und auch störanfällig, weil durch Schwankungen im Herstellungsprozeß die Wirksamkeit des Dispersionsstabilisators beeinträchtigt werden kann. In der EP-A-38 127 werden diese Bindemittel zur Herstellung von Metallic Basecoats verwendet, wobei die Aluminium-Plättchen, bzw. Pigmente mit Hilfe eines Melaminharzes in den Lack eingebracht werden. Bei niedrigen Einbrenntemperaturen wirkt dieses Harz wie ein Weichmacher und verschlechtert die Feuchtigkeitsanfälligkeit des Films.

In der DE-PS 27 36 542 werden Grundierungen für Metallspulen auf der Basis von Acrylatharz-Polyurethan-Dispersionen beschrieben. Hierbei werden Kombinationen von Polyurethan-Dispersionen mit Latex-Polymerisaten gegebenenfalls unter Zusatz von Melaminharzen verwendet. Spezielle Kombinationen, die auf die Erfordernisse von Metallic-Basecoats abgestimmt sind, werden nicht genannt.

In der DE-OS 19 53 348 wird eine radikalische Emulsionspolymerisation von Vinylmonomeren in Gegenwart wässriger Dispersionen von hochmolekularen Polyurethanen mit anionischen Gruppen, durchgeführt. Die , PU-Dispersionen enthalten in den Beispielen Alkalisalze von 1:1-Addukten von Diaminen und Sultonen. Auf Grund des nichtflüchtigen Salzgehaltes im Film treten bei mehrschichtigen Lackaufbauten Haftungsprobleme auf. Spezielle Hinweise auf die Auswahl geeigneter PU-Harze oder ungesättigter Monomere, mit denen die Anforderungen an Metallic-Basecoats erfüllt werden, sind nicht genannt.

In der DE-OS 23 63 307 werden Vinylmonomere durch freie Radikalpolymerisation in Gegenwart eines Polyurethan-Latex umgesetzt. In den Beispielen werden nur Polyurethan Dispersionen auf Basis Polypropylenglykol verwendet, die außerdem noch mit einem relativ niedrigen Monomerengehalt umgesetzt werden. Es entstehen dabei Filme in Mehrschichtaufbauten, die nicht beständig genug gegen Feuchtraumbelastungen sind. Spezielle Bedingungen für die Auswahl zur Herstellung von Metallic-Basecoats sind auch hier nicht zu entnehmen.

Bei der DE-OS 35 45 618 handelt es sich um reine PU-Dispersionen zur Herstellung von Wasserbasecoats für Mehrschichtüberzüge. Eine Umsetzung mit ungesättigten Monomeren findet nicht statt. Sie werden hergestellt

durch Reaktion von linearen Polyether- und Polyesterdiolen unter Zusatz von Triolen mit Diisocyanaten in inerten organischen Lösemitteln. Die entstehenden Polyurethane müssen in den verwendeten Lösemitteln gut löslich sein. Das Neutralisieren und Verdünnen mit Wasser ist technisch nur bei Einsatz relativ niedrigmolekularer Harze und erhöhter Lösemittelmengen beherrschbar. Die Filmeigenschaften zeigen eine hohe Lösemittelempfindlichkeit, die beim Aufbringen des Klarlackes auf den Basecoat zu Schwierigkeiten führt. Höhermolekulare Polyurethane lassen sich nur schwer in Wasser emulgieren und führen zu sehr grpbteiligen Emulsionen. Beständige Systeme brauchen einen hohen Gehalt an Salzgruppen.

In der DE-OS 32 10 051 werden wasserverdünnbare Polyurethan-Dispersionen zur Herstellung von Metallic-Basecoats verwendet, die durch Dispergieren eines neutralisierten anionischen NCO-Prepolymeren in Wasser und anschließende Kettenverlängerung mit Polyaminen erfolgt. Diese Überzugsmittel bereiten bei der praktischen Verwendung in Serienlackierprozessen Probleme, weil die schnell trocknenden Überzugsmittel in den zur Anwendung kommenden Applikationsgeräten (z.B. Lackspritzpistole oder elektrostatisch unterstützte Hochrotationsglocken) an der Wandung koagulieren und dort so gut haften, daß sie nur unter großen Schwierigkeiten wieder entfernt werden können. Daher ist die Gefahr zur Bildung von Stippen oder Gelteilchen in der Filmoberfläche sehr groß und ein schneller Farbtonwechsel durch schwierige Reinigungsoperationen erschwert. Durch den Zusatz von Acrylatharz-Lösungen, werden zusätzlich große Lösemittelmengen in das Gemisch eingeschleppt. Der Zusatz von Melaminharzen erschwert bei niedrigen Einbrenntemperaturen, wie sie für Reparaturen notwendig sind, die Herstellung von geeigneten wasserbeständigen Filmen.

In der US-PS 4 318 833 werden thermoplastische Polymere durch Polymerisation von ungesättigten Monomeren in Gegenwart von voll umgesetzten wasserlöslichen Polyurethanen hergestellt, die entweder oxidativ trocknende Eigenschaften haben oder nach Zusatz von Vernetzungsmitteln wie Aminoplasten, Phenoplasten oder blockierten Polyisocyanaten bei 10 bis 15 Minuten 125 bis 175 °C als pigmentierbare Decklacke einbrennbar sind. Das wasserlösliche Polyurethanharz kann aus Polyether- oder Polyesterdiolen hergestellt werden und enthält anionische oder kationische Gruppen. Das Harz muß in den für die Herstellung notwendigen inerten Lösemitteln gut löslich sein. Das Neutralisieren und Verdünnen mit Wasser ist technisch nur bei Einsatz relativ niedrigmolekularer Harze und erhöhter Lösemittelmengen beherrschbar. Die Beispiele dieser US-PS zeigen nur, daß eine Polymerisation von ungesättigten Monomeren in Gegenwart einer PU-Dispersion im Verhältnis 2 Teile Polyurethan zu 1 Teil Monomere (bezogen auf den Festkörper) möglich ist. Es hat sich aber gezeigt, daß mit einem erhöhten Monomerengehalt Polymerisate erhalten werden, die sich schlecht filtrieren lassen und zu stippenhaltigen Lackfilmen mit unbrauchbarer Oberfläche führen. Die Filme zeigen teilweise ungenügende Eigenschaften in der Wasserfestigkeit und Lösemittelbeständigkeit.

Es bestand daher die Aufgabe, ein Verfahren zur Herstellung eines Mehrschichtüberzuges unter Verwendung eines weitgehend physikalisch trocknenden Bindemittelsystems auf wäßriger Basis bereitzustellen, das die vorstehenden Nachteile nicht aufweist.

Überraschenderweise hat sich gezeigt, daß diese Aufgabe gelöst werden kann durch ein Verfahren zur Herstellung eines Mehrschichtüberzuges, bei dem auf ein Substrat ein gesättigtes Basisüberzugsmittel aus einer wäßrigen Dispersion eines nicht-vernetzten Polymeren aufgebracht wird, wobei die wäßrige Dispersion Teilchendurchmesser der polymeren Phase von 10 nm bis 500 nm aufweist, das Polymere eine zahlenmittlere Molmasse von 10000 bis 500000 und eine Säurezahl von 12 bis 40 aufweist, und die Dispersion erhalten wurde durch Polymerisation ohne Emulgatorzusatz und in Anwesenheit von nicht-wasserlöslichen Initiatoren, von

a) 0,65 - 9 Gewichtsteilen einer Monomerenmischung aus 28-90 Gew.% carboxylgruppenfreien ungesättigten Monomeren, die außer der ungesättigten Bindung keine weiteren unter Polymerisations- und Härtungsbedingungen reaktiven Gruppen enthalten, 10-65 Gew.% einpolymerisierbaren hydroxylgruppenhaltigen Monomeren der allgemeinen Formel R''-CH=CR'-X-R''' worin

> R' = H oder $-C_nH_{2n+1}$;
> R'' = -R' oder $-COOC_nH_{2n+1}$,
> n = 1 bis 6,
> R''' = eine lineare oder verzweigte $C_{1-6}$-Alkylgruppe mit 1 bis 3 OH-Gruppen; und
> X = -COO-, -CONH-, $-CH_2$-O- oder -O-;

und 0 - 7 Gew.% ethylenisch polyungesättigten Monomeren, in

b) 1 Gewichtsteil, bezogen auf den Harzanteil, einer wäßrigen Dispersion eines harnstoffgruppenhaltigen Polyurethans, die durch Kettenverlängerung eines NCO-Gruppen enthaltenden Prepolymeren auf Polyesterbasis mit einem NCO-Gruppen-Gehalt von 1,0 bis 10 % mit mindestens zwei Urethangruppen pro MoleküL, mit Carboxylgruppen entsprechend einer Säurezahl von 20 - 50 und einer zahlenmittleren Molmasse von 600 bis 6000, mit einem Polyamin mit primären und/oder sekundären Aminogruppen und/oder mit Hydrazin in wäßrigem Medium ohne Emulgatorzusatz hergestellt wurde,

und gegebenenfalls anschließenden Zusatz von Pigmenten, Füllstoffen, Lösemitteln, Verdickungsmitteln und/oder üblichen Lackhilfsmitteln und Zusatzstoffen,
der so erhaltene Basisüberzug abgelüftet, ein wasserverdünnbares oder in organischen Lösemitteln gelöstet transparentes Überzugsmittel aufgebracht und anschließend das so beschichtete Substrat einer Erwärmung bei Temperaturen bis zu 140 °C unterworfen wird.

Bei dem erfindungsgemäß für das Basisüberzugsmittel eingesetzten physikalisch trocknenden Bindemittelsystem für wäßrige Überzugsmittel handelt es sich um ein solches, das in geeigneter Lösemitteleinstellung ohne Koagulationserscheinungen elektrostatisch verspritzbar ist, wozu beispielsweise Hochrotationsglocken eingesetzt werden können. Man erhält ausgezeichnete Überzüge mit einer ungewöhnlichen Kombination von Eigenschaften. Es hat sich gezeigt, daß die erhaltenen Überzüge ohne Anlöseerscheinungen wie Kräuseleffekte "Naß in Naß" mit Klarlacken überspritzt werden können und bei forcierter Trocknung z.B. bei Temperaturen in der Größenordnung von beispielsweise 80 °C eine Lagerung in Wasser überstehen, ohne daß Oberflächenstörungen und Haftungsverluste auftreten. Die erfindungsgemäß erhaltenen Polyurethandispersionen sind nicht vernetzte, nach Gefriertrocknung in polaren Lösemitteln wie N-Methyl-pyrrolidon oder Dimethylformamid in der Wärme löslich und als solche ausgezeichnete Filmbildner.

Zur Herstellung der erfindungsgemäß als Basisüberzugsmittel eingesetzten wäßrigen Dispersion wird eine wäßrige Dispersion des vorstehend definierten harnstoffgruppenhaltigen Polyurethans b) vorgelegt. Die radikalisch polymerisierbaren ethylenisch ungesättigten Monomeren a) werden in dieser Vorlage in geeigneter Weise polymerisiert.

Die Mengenanteile von a) : b) betragen 30 : 70 bis 90 : 10 bezogen jeweils auf das Gewicht der Monomeren a), bzw. das Gewicht des Harzanteils der Polyurethan-Dispersion b). Bevorzugt wird eine Menge von weniger als 60 Gew.-%, besonders bevorzugt von weniger als 50 Gew.-% Polyurethan und mindestens eine Menge von 20 %, besonders mindestens von 30 % PU eingesetzt.

Zur Herstellung der wässrigen Dispersion können die radikalisch polymerisierbaren ethylenisch ungesättigten Monomeren a) der wässrigen Dispersion des Polyurethans b) langsam zugesetzt werden. Dabei ist es möglich, sowohl die gesamte Menge der Monomeren auf einmal zuzugeben als auch nur einen Teil vorzulegen und den Rest im Verlauf der Reaktion nachzudosieren. Die Monomeren können jedoch auch bevorzugt mit Hilfe eines Teiles der PU-Dispersion und Wasser in eine Preemulsion gebracht werden, die dann langsam der Vorlage zugesetzt wird. Die Zulaufzeit der Monomeren a) beträgt im allgemeinen 2 bis 8 Stunden, bevorzugt etwa 3 bis 4 Stunden.

Die für die Suspensions-Polymerisation gebrauchten wasserunlöslichen organischen Initiatoren werden beispielsweise der Vorlage zugesetzt oder zusammen mit den Monomeren zugetropft. Sie können jedoch auch in unterschiedlicher Konzentration anteilweise der Vorlage zugegeben werden, die ein Teil der Monomeren enthält. Der Rest an Initiator wird mit dem restlichen Monomeren zudosiert. Die radikalische Initiierung erfolgt durch thermische Zersetzung von organischen Peroxiden wie tert.Butylperoctoat oder mit Azo-Verbindungen, wie Azo-bis-isobutyronitril. Die Reaktionstemperatur ergibt sich aus der Zerfallsgeschwindigkeit des Initiators und kann gegebenenfalls durch geeignete organische Redoxysteme gesenkt werden. Die Polymerisation erfolgt im allgemeinen bei einer Temperatur von 30 bis 100 °C, insbesondere bei einer Temperatur von 60 bis 95 °C. Die Temperaturen können jedoch bis zu 130 °C ansteigen, wenn Drücke bis zu etwa 10 bar verwendet werden.

Die so hergestellten Dispersionen enthalten Polymere mit einer zahlenmittleren Molmasse (Mn) von 10000 bis 500000, die untere Grenze liegt bevorzugt bei 20000, besonders bevorzugt bei 30000, die obere Grenze liegt bevorzugt bei 400000, besonders bevorzugt bei 300000. Ihre Säurezahl liegt im allgemeinen zwischen 12 und 40. Die untere Grenze liegt bevorzugt bei 15, die obere Grenze liegt bevorzugt bei 30.

Die acrylierten Polyurethan-Dispersionen haben bevorzugt eine Hydroxylzahl von 5 bis 100. Die untere Grenze liegt besonders bevorzugt bei 20, die obere Grenze liegt besonders bevorzugt bei 80.

Dispersionen, die für Metallic-Basecoats geeignet sind, müssen gut filtrierbar sein und eine stippenfreie, glatte Filmoberfläche bilden. Diese Eigenschaften sind abhängig von der Teilchengröße. Sie ist in komplizierter Weise abhängig vom chemischen Aufbau der PU-Dispersion, dem Verhältnis von Polyurethan und Polymerisatharz in Abhängigkeit von der Säurezahl der PU-Dispersion, dem Neutralisationsmittel und Neutralisationsgrad, sowie den Reaktionsbedingungen während des Dispergierprozesses wie beispielsweise der Temperatur und der Rührgegeschwindigkeit. Die Teilchengröße der mit ungesättigten Monomeren umgesetzten Dispersion liegt im allgemeinen unter 500 nm, bevorzugt unter 300 nm besonders bevorzugt unter 200 nm. Sie liegt bevorzugt größer als 10 nm, besonders bevorzugt größer als 20 nm. Ein bevorzugter Bereich liegt bei 20 - 300 nm.

Als ethylenisch ungesättigte Monomere kommen solche radiaklisch polymerisierbare Monomere in Frage, für die die üblichen Einschränkungen für Copolymerisationen gelten, die durch das Q- und e-Schema nach Alfrey und Price, bzw. die Copolymerisationsparameter vorgegeben sind (vgl. z.B. Brandrup und Immergut, Polymer Handbook, 2nd ed., John Wiley + Sons, New York (1975 ) ).

Die Glasübergangstemperatur der acrylierten Polyurethan-Dispersion liegt zwischen 20 und 100°C.

Es werden Monomergemische eingesetzt, vorzugsweise solche Gemische, die zu einem Copolymerisat führen, dessen Glasübergangstemperatur über der Glasübergangstemperatur des vorgelegten Polyurethanharzes liegt.

Solche Gemische setzen sich wie folgt zusammen:

a) 28 bis 90 Gew.-%,
insbesondere 35 bis 85 Gew.-% ungesättigte, insbesondere ethylenisch ungesättigte Monomere, die außer der ungesättigten Bindung keine weiteren reaktiven Gruppen tragen,
b) 10 bis 65 Gew.-%,
besonders 10 bis 60 Gew.-%,
insbesondere 15 bis 50 Gew.-% einpolymerisierbare, hydroxylgruppenhaltige Monomere, insbesondere ethylenisch mono-ungesättigte, hydroxylgruppenhaltige Monomere,
c) 0 bis 7 Gew.-%,
insbesondere 0 Gew.-% ethylenisch polyungesättigte Monomere.

Die Auswahl der ungesättigten Monomeren, die keine weiteren reaktiven Gruppen enthalten, erfolgt nach den mechanischen und Verträglichkeitseingenschaften.Es werden Acrylsäurealkylester, Methacrylsäure-alkylester und/oder Maleinsäure- oder Furmarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymeres sind beispielsweise Monomere vom Vinyl-o-,m- oder p-Aromaten-Typ wie Styrol, $\alpha$-substituierte Styrole wie $\alpha$-Methylstyrol, o-. m- oder p-Alkylstyrole wie Vinyltoluol oder p-tert.-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornylmethacrylat, Dihydrodicyclopentadienylmethacrylat, (Meth)acrylamid und/oder (Meth)-acrylnitril. "Weiche" Monomere sind dagegen Acrylsäureester mit einer langen Alkoholkette wie n-Butylacrylat, Isobutylacrylat, tert.-Butylacrylat und/oder 2-Ethylhexylacrylat. Es können auch ungesättigte Ether wie Ethoxyethylmethacrylat oder Tetrahydrofurfurylacrylat eingesetzt werden. Monomere vom Vinylester-Typ, vorzugsweise Vinylester der Versaticsäure können bei Einhaltung geeigneter Reaktionsbedingungen anteilweise auch verwendet werden.

Unter einpolymerisierbaren, hydroxylgruppenhaltigen Monomeren werden solche verstanden, die außer einer polymerisierbaren ethylenisch ungesättigten Gruppe noch mindestens eine Hydroxylgruppe an einem $C_2$ bis $C_{20}$ Kohlenstoffgerüst enthalten. Es sind hauptsächlich ungesättigte Veresterungsprodukte der allgemeinen Formel

$$R''\text{-}CH = CR'\text{-}X\text{-}R'''$$

worin

$R' = -H$ oder $-C_nH_{2n+1}$,
$n = 1$ bis 6, bevorzugt $n = 1$,
$R'' = -R'$ oder $-COOC_nH_{2n+1}$; $R'''$ = eine lineare oder verzweigte $C_{1\text{-}6}$-Alkylgruppe mit 1 bis 3 OH-Gruppen,
und $X = -COO-, -CONH-, -CH_2O-$ oder $-O-$.

Besonders geeignet sind (Meth)acrylsäure-hydroxyalkylester wie $\beta$-Hydroxyethylacrylat, $\beta$-Hydroxypropylmethacrylat, Butandiol-1,4-monoacrylat, Propylenglykolmonoacrylat, 2.3-Dihydroxypropylmethacrylat, Pentaerythrit-monomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Es können jedoch auch N-Hydroxyalkyl(meth)acrylamide oder N-Hydroxyalkyl-fumarsäuremono- oder diamide, wie N-Hydroxyethyl-acrylamid oder N-(2-Hydroxypropyl)methacrylamideingesetzt werden. Besonders elastische Eigenschaften sind beim Einsatz eines Reaktionsprodukts von Hydroxyalkyl-(meth)acrylat mit $\varepsilon$-Caprolacton zu erhalten. Andere hydroxylgruppenhaltige Verbindungen sind Allylalkohol, Monovinylether von Polyolen, besonders Diolen, wie Monovinylether des Ethylenglykols und Butandiols, sowie hydroxylgruppenhaltige Allylether oder -ester wie 2.3-Di-hydroxypropyl-monoallylether, Trimethylolpropan-monoallylether oder 2.3-Dihydroxypropansäure-allylester. Besonder geeignet sind Hydroxyalkyl(meth)acrylate, z.B. Hydroxyethyl(meth) acrylat.

Unter ethylenisch polyungesättigten Monomeren werden Verbindungen mit mindestens 2 radikalisch polymerisierbaren Doppelbindungen nach der allgemeinen Formel $R\text{-}CH = CR'\text{-}A\text{-}(\text{-}CR' = CH\text{-}R)_m$, mit $m = 1$ bis 3, bevorzugt $m = 1$, verstanden, wobei neben den weiter oben angegebenen Bedeutungen A das allgemeine, tragende chemische Grundgerüst für die reaktive Doppelbindung ist. Beispieie für A sind der o-, m- oder p-Phenylrest und Reste der Formel -X-Alkyl-X', worin Alkyl bevorzugt 2 bis 18 C-Atome aufweisen, X und X' gleiche oder verschiedene verbindende Gruppen, z.B. -O-, -CONH-, -COO-, -NHCOO- oder -NH-CO-NH- sind. A kann z.B. ein Benzolring wie im Divinylbenzol sein, der gegebenenfalls auch substituiert sein kann wie p-Methyldivinylbenzol oder o-Nonyldivinylbenzol.

Andere geeignete ethylenisch polyungesättigte Monomere sind Reaktionsprodukte aus Polyalkoholen, besonders Dialkoholen, mit $\alpha,\beta$-ungesättigten Carbonsäuren, wie sie schon definiert sind. Beispiele hierfür sind Ethandioldiacrylat, Ethylenglykoldimethacrylat, 1.4-Butandiol-diacrylat, 1.6-Hexandiol-diacrylat,Neopen tylglykol-dimethacrylat, Triethylenglykoldimethacrylat, Polyglykol-400-diacrylat, Glycerin-dimethacrylat, Trimethylolpropan-triacrylat und/oder Pentaerythrit-di-acrylat. Urethan- und amidgruppenhaltige polyfunktionelle Monomere werden hergestellt durch Reaktion von beispielsweise Hexandiisocyanat oder Methacrylsäure-$\beta$-isocyanatoethylester mit Hydroxyethyl (meth)acrylat oder (Meth)-acrylsäure, Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bismaleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandioldiacrylat oder Hexandiol-diacrylat. Bei Verwendung von Glycidyl-methacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Bevorzugte Monomer-Kombinationen sind beispielsweise (Meth)-acrylsäurealkylester, Styrol, Hydroxyalkyl-(meth)acrylsäureester als mono-olefinisch ungesättigte Verbindungen und gegebenenfalls geringe Mengen an Divinylbenzol, Butandiol-diacrylat oder Hexandiol-diaycrlat als mehrfach ungesättigte Verbindungen.

Die als Vorlage, bzw. zum Voremulgieren der Monomeren verwendete Polyurethan-Dispersion ist bevorzugt anionisch und hat bevorzugt eine Teilchengröße von maximal 150 nm, bevorzugt unter 100 nm und besonders bevorzugt unter 50 nm. Die Teilchengröße der mit ungesättigten Monomeren umgesetzten Polyurethan-Dispersion ist stark abhängig von der Säurezahl der reinen Polyurethan-Dispersion und ihrem Mengenanteil im Endprodukt. Die Säurezahl der reinen PU-Dispersion wird festgelegt durch die geforderte Säurezahl der acrylierten PU-Dispersion und dem Anteil der Monomeren nach der Formel

$$SZ_{(PU)} = \frac{SZ_{(Endprodukt)} \times 100}{100 - \%\ Monomer}$$

Die Säurezahl der reinen Polyurethan-Dispersion sollte zwischen 20 und 50 liegen. Die obere Grenze liegt bevorzugt unter 45, die untere Grenze bevorzugt über 25. Die Herstellung dieser Dispersion erfolgt durch Kettenverlängerung eines NCO-Prepolymeren mit endständigen Isocyanatgruppen mit Polyaminen und/oder Hydrazin nach Neutralisation mit tert. Aminen und Emulgieren in Wasser. Hierbei werden bevorzugt alle Isocyanatgruppen mit Diaminen, gegebenenfalls unter anteilweisem Zusatz von höheren Polyaminen umgesetzt, wobei praktisch keine basischen Aminstickstoffatome übrig bleiben sollen. Es werden bevorzugt harnstoffgruppenhaltige Polyurethandispersionen hergestellt, die mindestens 2, bevorzugt 4 Urethangruppen und mindestens 1 Carboxylgruppe im NCO-Prepolymer enthalten. Mit Hilfe dieses Verfahrens enstehen hochmolekulare Produkte mit verbesserter Dispergierbarkeit.

Die Herstellung des isocyanatgruppenhaltigen Prepolymeren erfolgt durch Reaktion von Polyalkoholen, bevorzugt Dialkoholen, bzw. Dialkoholgemischen, mit überschüssigen Polyisocyanaten bei Temperaturen bis zu 150° C, bevorzugt 50 bis 130° C in organischen Lösemitteln, die nicht mit Isocyanatgruppen reagieren. Die Reaktion wird solange durchgeführt bis praktisch alle Hydroxylfunktionen umgesetzt sind. Um die Isocyanatendständigkeit des Prepolymeren zu sichern, werden die Isocyanatverbindungen im allgemeinen in solchen Mengen eingesetzt, daß sich ein stöchiometrischer Überschuß an Isocyanat von mindestens 5 % ergibt. Der bevorzugte Bereich liegt bei etwa 1.1 bis 2.5 NCO-Gruppen für jedes vorhandene aktive H-Atom. Das stöchiometrische Verhältnis von NCO zu OH-Gruppen liegt besonders bevorzugt zwischen 1.3 und 1.1 zu 1. Der NCO-Überschuß kann durch Verringern des Anteils an OH-Komponenten oder umgekehrt durch Zusatz von Di-oder Triisocyanaten erhalten werden. Das NCO-Prepolymer enthält wenigstens 1 Gew.%, vorzugsweise wenigstens 2 Gew.-% Isocyanatgruppen bezogen auf den Feststoff. Die obere Grenze liegt bei etwa 10 Gew.-%. vorzugsweise bei 5 Gew.-%. Es enthält mindestens 5 % Urethangruppen, bevorzugt mindestens 10 Gew.-% und höchstens 25 Gew.-%, bevorzugt höchstens 20 Gew.-% NHCOO-Gruppen.

Die zur Herstellung des Prepolymeren eingesetzten Polyole können niedrigmolekular und/oder hochmolekular sein, aber auch reaktionsträge Carboxylgruppen enthalten. Das Polyolgemisch enthält eine OH-Zahl von 50 bis 400; die obere Grenze liegt bevorzugt unter 300 und besonders bevorzugt unter 200. Sie wird erhalten durch niedrigmolekulare Diole, die in dem Gemisch anteilweise enthalten sind und die eine Molmasse von 90 bis etwa 350 haben und aliphatische, alicyclische oder aromatische Gruppen enthalten können. Beispiele hierfür sind 1.4-Butandiol, 1.2-Butylenglykol, 1.6-Hexandiol, 1.2-Cyclohexandiol, 1.4-Cyclohexandimethanol, Neopentylglykol, Hydroxypivalinsäure-neopentylglykolester, hydroxyethyliertes oder Hydroxpropyliertes Bisphenol A, Bisphenol F, hydriertes Bisphenol A, hydriertes Bishpenol F und deren Mischungen. Die Polyole können geringe Anteile an höheren Polyolen wie beispielsweise Trimethylolpropan, Trimethylolethan enthalten, um eine Verzweigung einzuführen. Die Menge muß jedoch so klein sein, daß keine vernetzten Produkte entstehen.

Unter niedrigmolekularen Diolen werden auch solche verstanden, die neben zwei Hydroxylgruppen noch eine zur Anionenbildung befähigte Gruppe wie beispielsweise Carboxylgruppe enthalten. Sie dienen dazu dem im allgemeinen nicht mit Wasser verträglichen Polyurethan eine so große Säurezahl zu geben, daß das neutralisierte Produkt stabil in Wasser zu emulgieren ist. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Es werden dazu beispielsweise Alkansäuren mit zwei Substituenten am α-endständigen Kohlenstoffatom eingesetzt. Der Substituent kann eine Hydroxylgruppe, eine Alkylgruppe oder bevorzugt eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispieie für solche Verbindungen sind Dihydroxypropionsäure, Dihydroxybernsteinsäure und Dihydroxybenzoesäure. Eine besonders bevorzugte Gruppe von Dihydroxyalkansäuren sind die α,α-Dimethylolalkansäuren, die durch die Strukturformel

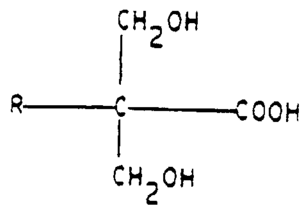

gekennzeichnet sind, worin R=Wasserstoff oder eine Alkylgruppe mit bis zu etwa 20 Kohlenstoffatomen bedeutet. Beispiele für solche Verbindungen sind 2.2-Dimethylolessigsäure, 2.2-Dimethylolpropionsäure, 2.2-Dimethylolbuttersäure und 2.2-Dimethylolpentansäure. Die bevorzugte Dihydroxyalkansäure ist 2.2-Dimethylolpropionsäure. Das Carboxylgruppen enthaltende Polyol kann 3 - 30 Ge.-%. vorzugsweise 5 - 15 Gew.-%, der gesamten Polyolbestandteile im NCO-Prepolymer ausmachen.

Hochmolekulare Polyole bestehen bevorzugt überwiegend aus gesättigten Polyesterdiolen mit einer bevorzugten Hydroxylzahl von 30 bis 150, besonders bevorzugt von 60 bis 130 und einer bevorzugten Molmasse von 400 bis 5000, besonders bevorzugt von 800 bis 3000. Die bevorzugt linearen Polyesterdiole werden durch Versterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der bevorzugt linearen Polyester verwendeten Diole bestehen beispielsweise aus Alkylenglykolen wie Ethylenglykol, Propylenglykol, Butylenglykol, Butandiol-1.4, Hexandiol-1.6, Neopentylglykol und andere Diole wie Dimethylolcyclohexan. Es können auch Polyolgemische eingesetzt werden, z.B. durch Einestern von kleinen Mengen an höheren Polyolen, wie Trimethylolethan, Trimethylolpropan, Glycerin oder Pentaerythrit. Die Menge muß so dosiert werden, daß keine vernetzten Polyurethane entstehen. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäure. Bei der Bildung von Polyesterpolyolen können auch kleinere Mengen an Carbonsäuren mit 3 oder mehr Carboxylgruppen beispielsweise Trimellithsäureanhydrid anwesend sein. Um verseifungsstabile Bindungen zu bekommen, werden Gemische von Dicarbonsäure, die keine Anhydride bilden, besonders von aromatischen Dicarbonsäuren, wie Isophthalsäure, und aliphatischen Dicarbonsäuren, wie Adipinsäure, bevorzugt eingesetzt.

Erfindungsgemäß werden auch Polyesterdiole verwendet, die durch Umsetzen eines Lactons mit einem Diol erhalten werden. Für die Herstellung der Polyesterdiole wird das unsubstituierte ε-Caprolacton verwendet. Die Umsetzung mit Lacton wird durch niedermolekulare Polyole wie Ethylenglykol, 1.3-Propandiol, 1.4-Butandiol, Dimethylolcyclohexan gestartet. Es können jedoch auch andere Reaktionskomponenten wie Ethylendiamin, Alkyldialkanolamine oder auch Harnstoff mit Caprolacton umgesetzt werden. Als höhermolekulare Diole eignen sich auch Polylactamdiole die durch Reaktion von beispielsweise ε-Caprolactam mit niedermolekularen Diolen hergestellt werden.

Als typische multifunktionelle Isocyanate eignen sich aliphatische, cycloaliphatische und/oder aromatische Polyisocyanate mit mindestens zwei Isocyanatgruppen pro Molekül. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenyl-methandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat, und Dicyclohexylmethandiisocyanat. Aliphatische Diisocyanate sind Verbindungen der Formel

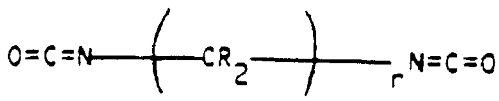

worin r eine ganze Zahl von 2 bis 20, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexyl-methandiisocyanat. Die zur Bildung des Präpolymeren gebrauchte Polyisocyanat-Komponente kann auch einen Anteil höherwertiger Polyisocyanate enthalten, vorausgesetzt sie wird nicht durch Gelbildungen beeinträchtigt. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Bluret von Hexamethylendiisocyanat und Wasser, das Isocyanurat des Hexamethylendiisocyanats, das Addukt von Isophorondiisocyanat an Trimethylolpropan oder Oxadiazintrione. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die erfindungsgemäß verwendeten NCO-Prepolymere können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Die Umsetzung kann gegebenenfalls in Gegenwart eines Katalysators wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Verwendbare Lösemittel sind beispielsweise Dimethylformamid, Ester, Ether wie Diethylenglykol-dimethylether, Ketoester, Ketone wie Methylethylketon und Aceton, mit Methoxygruppen substituierte Ketone wie Methoxy-hexanon, Glykoletherester, chlorierte Kohlenwasserstoffe, aliphatische und alicyclische Kohlenwasserstoffpyrrolidone wie N-Methylpyrrolidon, hydrierte Furane, aromatische Kohlenwasserstoffe und deren Gemische. Die Menge an Lösemittel kann in weiten Grenzen variieren und sollte zur Bildung einer Präpolymer-Lösung mit geeigneter Viskosität ausreichen. Meistens genügen 0.01 bis 15 Gew.-% Lösemittel, vorzugsweise 0.02 bis 8 Gew.-% Lösemittel bezogen auf den Festkörper. Sieden die gegebenenfalls nicht wasserlöslichen Lösemittel niedriger als das Wasser, so können sie nach der Herstellung der harnstoffhaltigen Polyurethan-Dispersion durch Vakuumdistillation oder Dünnschichtverdampfung schonend abdestilliert werden. Höhersiedende Lösemittel sollten weitgehend wasserlöslich sein und verbleiben in der wäßrigen Polyurethan-Dispersion, um das Zusammenfließen der Polymer-Teilchen während der Filmbildung zu erleichtern. Besonders bevorzugt werden als Lösemittel Ketone, wie Methyl-ethyl-keton, die nach der Emulsionsbildung vollständig abdestilliert werden

Die anionischen Gruppen des NCO-Prepolymeren werden mit einem tertiären Amin mindestens teilweise neutralisiert. Die dadurch geschaffene Zunahme der Dispergierbarkeit in Wasser reicht für eine unendliche Verdünnbarkeit aus. Sie reicht auch aus, um das durch Kettenverlängerung erhaltene neutralisierte harnstoffgruppenhaltige Polyurethan beständig zu dispergieren. Geeignete tertiäre Amine sind beispielsweise Trimethylamin, Triethylamin, Dimethylanilin, Diethylanilin, N-Methylmorpholin. Das NCO-Prepolymer wird gegebenenfalls nach Vermischen mit bis zu 10 Gew.-%, bevorzugt unter 6 Gew.-%, Polyisocyanaten mit mehr als zwei NCO-Gruppen, bevorzugt Triisocyanaten, und anschließender Neutralisation, mit Wasser verdünnt und ergibt dann eine feinteilige Dispersion. Kurz danach werden die noch vorhandenen Isocyanatgruppen mit Di-aminen, gegebenenfalls unter anteilweisem Zusatz von höheren Polyaminen mit primären und/oder sekundären Aminogruppen als Kettenverlängerer umgesetzt. Diese Reaktion führt zu einer weiteren Verknüpfung und Erhöhung der Molmasse. Die Konkurrenzreaktion zwischen Amin und Wasser mit dem Isocyanat muß, um optimale Eigenschaften zu erhalten, gut abgestimmt (Zeit, Temperatur, Konzentration) und für eine reproduzierbare Produktion gut überwacht werden. Als Kettenverlängerer werden wasserlösliche Verbindungen bevorzugt, weil sie die Dispergierbarkeit des polymeren Endproduktes in Wasser erhöhen. Bevorzugt werden organische Diamine, weil sie in der Regel die höchste Molmasse aufbauen, ohne das Harz zu gelieren. Voraussetzung hierfür ist jedoch, daß das Verhältnis der Aminogruppen zu den Isocyanatgruppen zweckentsprechend gewählt wird.

Die Menge des Kettenverlängerers wird von seiner Funktionalität, vom NCO-Gehalt des Prepolymeren und von der Dauer der Reaktion bestimmt. Das Verhältnis der reaktiven Aminogruppen im Kettenverlängerer zu den NCO-Gruppen im Prepolymeren sollte in der Regel geringer als 1:1 und vorzugsweise im Bereich von 1:1 bis 0.5:1 liegen. Die Anwesenheit von überschüssigem aktiven Wasserstoff, insbesondere in Form von primären Aminogruppen, kann zu Polymeren mit unerwünscht niedriger Molmasse führen. Die Molmasse kann durch Zusatz von Polyisocyanaten, z.B. Diisocyanaten oder Triisocyanaten erhöht werden. Als Polyisocyanate mit mehr als zwei NCO-Gruppen, die vor oder nach der Kettenverlängerung zu dem NCO-Gruppen enthaltenden Prepolymeren zugeführt werden können, eignen sich z.B. solche mit einer Molmasse von 165 bis 750. Besonders geeignet sind Triisocyanate mit einer derartigen Molmasse. Ein anderer bevorzugter Weg ist der Zusatz von mehr als zwei NCO-Gruppen enthaltenden Polyisocyanaten, insbesondere Triisocyanaten, nach der Kettenverlängerung. Als Beispiele für Triisocyanate können die vorstehend für den Einbau in das NCO-Prepolymer genannten verwendet werden. Es versteht sich, daß die obere Zusatzmenge durch die Gefahr einer Gelbildung bzw. schlechte Dispergierbarkeit begrenzt wird.

Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1,4-Butyldiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Alkyl- oder Cycloalkyldiamine wie Propylendiamin und 1-Amino-3-aminomethyl-3.5.5-trimethylchyclohexan. Die Kettenverlängerung kann wenigstens teilweise mit einem Polyamin erfolgen, das mindestens drei Aminogruppen mit reaktionsfähigem Wasserstoff aufweist, z.B. Diethylentriamin. Als Kettenverlängerer können auch Diamine verwendet werden, deren primären Aminogruppen als Ketimine geschützt sind, und die erst bei Anwesenheit von Wasser durch Abspaltung des Ketons reaktiv werden. Um ein Gelieren bei der Kettenverlängerung zu verhindern, können insbesondere bei sehr hohem NCO-Gehalt auch kleine Anteile von Monoaminen wie Ethylhexylamin zugesetzt werden.

Die vorstehend definierten Polymerisate bilden die Bindemittel auf wäßriger Basis der erfindungsgemäß verwendeten Überzugsmittel und können, falls nötig von nicht-ungesetztem Monomer durch Erhöhen der Temperatur und gegebenenfalls Anlagen von Vakuum unter Abdestillieren des überschüssigen Monomers gereinigt werden. Sie können gegebenenfalls weiter neutralisiert werden, wodurch eine ausreichende Wasserverdünnbarkeit entsteht. Zur Neutralisation können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Die erfindungsgemäß eingesetzten wäßrigen Überzugsmittel werden bevorzugt farbig pigmentiert. Als Farbmittel können z.B. solche eingesetzt werden, wie sie in der deutschen Norm DIN 55944, Blatt 1-4 vom November 1973, beschrieben sind. Es sind auch handelsübliche Pigmentpräparationen geeignet. Die erfindungsgemäßen Überzugsmittel sind besonders geeignet zur Einarbeitung von Effektpigmenten, wie z.B. Metallpigmenten (z.B. Alubronzen) und/oder Perlglanzpigmenten und/oder Interferenzpigmenten, woraus hervorragende Effektlacke resultieren. Die Effektpigmente, wie die Metallpigmente bzw. Perlglanzpigmente können z.B. durch einfaches Vermischen in die wäßrigen Bindemittel eingearbeitet werden, gegebenenfalls durch anteilige Mitverwendung von Lösemitteln, Wasser, Dispergierhilfsmitteln und Verdickungsmitteln. Eine Vermahlung mit Mühlen ist nicht notwendig.

Sollen farbige Metalleffekte oder Unifarbtöne erhalten werden, so werden die jeweiligen Pigmente mit einem Anreibeharz auf z.B. Perlmühlen sorgfältig angerieben (dispergiert). Verwendbare Anreibeharze sind z.B. die vorher beschriebenen Polyurethan-Dispersionen oder auch kettenverlängernde reine Polyurethan-Dispersionen nach Neutralisieren und Anquellen mit organischen Lösemitteln und gegebenenfalls Wasser. Außerdem können verwendet werden wasserverdünnbare Polyesterharze, Acrylatharze und/oder Carboxylgruppen enthaltende nicht kettenverlängerte Polyurethanharze. Die Menge des, zugesetzten Pasten- bzw. Anreibeharzes oder Anreibemittels sollte so klein wie möglich sein, jedoch können bei schlecht benetzbaren Pigmenten bis zu 20 Gew.-% des Bindemittels durch das Pastenharz ersetzt werden.

Besonders bevorzugt und geeignet als Anreibeharz für Pigmente ist auch ein Harz, das durch radikalische Lösungspolymerisation erhalten wird. Bevorzugt weist ein derartiges Harz eine zahlenmittlere Molmasse (Mn) von 10000 bis 500000, eine Glasübergangstemperatur von -50 bis +150° C, eine Säurezahl von 0 bis 80 (mgKOH) pro g Festharz), eine Hydroxylzahl von 60 bis 250 (mgKOH pro g Festharz) und eine Viskosität von 5 bis 100 Pa.s, 50%ig gemessen in Butoxyethanol bei 25° C, auf. Es besteht bevorzugt aus

| | |
|---|---|
| a) 0 bis 12 Gew.-%, | insbesondere 1 bis 10 Gew.-% $\alpha,\beta$-ungesättigten Carbonsäuren, |
| b) 10 bis 65 Gew.-%, | insbesondere 15 bis 50 Gew.-% einpolymerisierbaren, hydroxylgruppenhaltigen Monomeren, insbesondere ethylenisch mono-ungesättigten, hydroxylgruppenhaltigen Monomeren, |

c) 0 bis 7 Gew.-%, insbesondere 0.1 bis 5 Gew.-%, besonders bevorzugt 1.0 bis 3 Gew.-% polyungesättigten Monomeren, insbesondere ethylenisch polyungesättigten Monomeren und

d) 16 bis 90 Gew.-%, insbesondere 35 bis 85 Gew.-% ungesättigten, insbesondere ethylenisch ungesättigten Monomeren, die außer der ungesättigten Bindung keine weiteren reaktiven Gruppen tragen.

Beispiele für die ungesättigten Monomeren sind die vorstehend für die Herstellung der Bindemitteldispersion beschriebenen ungesättigten Monomeren. Um dieses bevorzugte Harz als Anreibeharz zu verwenden, wird es zweckmäßig mit Monoaminen (z.B. aliphatische, wie schon vorher zur Neutralisation beschrieben) zumindest teilweise neutralisiert und mit Wasser auf eine für die Anreibung geeignete Viskosität verdünnt.

Bei Verwendung von anderen Anreibeharzen kann auch ohne Zusatz von Wasser angerieben werden. Die erhaltene Paste wird dann dem Überzugsmittel zugesetzt und gegebenenfalls anschließend neutralisiert und mit Wasser verdünnt.

Ein solches bevorzugtes Anreibebindemittel ist beispielsweise ein Urethanmodifizierter Polyester, der mit wasserverdünnbaren organischen Lösemitteln anverdünnt ist und hergestellt wird durch Umsetzung

a) eines OH-Gruppen enthaltenden gesättigten Polyesters, erhalten durch Kondensation von einem oder mehreren mehrwertigen Alkoholen und aromatischen, aliphatischen und/oder cycloaliphatischen Polycarbonsäuren oder deren Anhydriden, mit

b) einem oder mehreren aromatischen, cycloaliphatischen oder aliphatisches Polyisocyanaten, wobei das Äquivalentverhältnis von OH-Gruppen zu Isocyanat-Gruppen 10:1 bis 1:1 beträgt und ein Teil der mehrwertigen Alkohoie zusätzlich eine freie Carboxylgruppe, die am $\alpha$-C-Atom zusätzlich zwei Alkylolgruppen als Substituenten aufweist, z.B. Dimethylolpropionsäure, enthält. Der Anteil der freien Carboxylgruppen ist derart, daß die Säurezahl des Harzes 40 bis 100 beträgt. Die Herstellung solcher Harze, die aufgrund ihrer Säurezahl von 40 bis 100 nach Neutralisation wasserlöslich sind, wird z.B. in der DE-OS 19 15 800 beschrieben.

Weiterhin können den erfindungsgemäß eingesetzten Überzugsmitteln übliche rheologische anorganische oder organische Additive zugesetzt werden, so wirken als Verdicker beispielsweise wasserlösliche Celluloseether wie Hydroxyethylcellulose, Methylcellulose oder Carboxymethylcellulose, synthetische Polymere mit ionischen und/oder assoziativ wirkenden Gruppen wie Polyvinylalkohol, Poly(meth)acrylamid, Poly(meth)-acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Polyurethane oder Polyacrylate. Besonders bevorzugt werden carboxylgruppenhaltige Polyacrylat-Copolymere mit einer Säurezahl von 60 bis 780, bevorzugt 200 bis 500, die auch zur Benetzung der metalleffektpigmente verwendet werden können.

Lösemittel und Neutralisationsmittel, wie sie beispielsweise für die Poly(meth)acrylatharze vorstehend beschrieben werden, können zur Korrektur der rheologischen Eigenschaften sowie der pH-Werte und zur Verbesserung der Lagerbeständigkeit und Verspritzbarkeit den Überzugsmitteln zugesetzt werden. In den Überzugsmitteln wird der Anteil an organischen Lösemitteln möglichst gering gehalten, er liegt beispielsweise unter 15 Gew.-%, bevorzugt unter 12 Gew.-%. Die Lösemittelmenge darf jedoch nicht soweit gesenkt werden, daß durch zu schnelle Koagulation der Dispersion ein störungsfreies Applizieren des Lackes beeinträchtigt wird.

Die Überzugsmittel sind strukturviskos und weisen im allgemeinen einen Festkörpergehalt von etwa 10 bis 50 Gew.-% auf. Die Strukturviskosität des Überzugsmittels läßt sich durch den Lösemittelgehalt, das Neutralisationsmittel und den Neutralisationsgrad, sowie den Festkörper beliebig einstellen. Der Festkörpergehalt varriiert mit dem Verwendungszweck des Überzugsmittels. Für Metalliclakke liegt er beispielsweise bevorzugt bei 10 bis 25 Gew.-%. Für unifarbige Lacke liegt er höher, beispielsweise bei 15 bis 50 Gew.-%.

Die wäßrigen Überzugsmittel können bereits bei niedrigen Temperaturen, gegebenenfalls unter Zusatz von Katalysatoren gehärtet werden. Die Härtung kann auch nach Beschichten mit einem üblichen Klarlack erfolgen, wobei vorgetrocknet oder bevorzugt naß in naß gearbeitet werden kann. Bei Verwendung von Zweikomponenten-Klarlacken (z.B. Acryl-Isocyanat und/oder Polyester-Isocyanat) werden bereits bei geringen Härtungstemperaturen besonders günstige Eigenschaften hinsichtlich Wasserfestigkeit, Steinschlagbeständigkeit, Haftung und Witterungsstabilität erzielt.

Derartige Härungstemperaturen liegen z.B. bei 80 bis 130°C. Mit einem Einkomponenten-Klarlack (Acryl-Meiamin oder Polyester-Melamin) sind Temperaturen über 120°C bevorzugt.

Die Schichtdicken der getrockneten Filme liegen bevorzugt bei 10 bis 30 µm für die Überzüge aus den Überzugsmitteln und bei 30 bis 60 µm bei zusätzlicher Verwendung eines Klarlackes. Bevorzugt werden erfindungsgemäß "High-solids" als klare Decklacke verwendet. Die Beschichtung mit Klarlack ist nicht unbedingt erforderlich. Sie ist besonders günstig in der Kraftfahrzeugindustrie.

Durch Einsatz nicht vorvernetzter Bindemittel wird mit den Überzugsmitteln ein guter Verlauf erzielt, was zu

glatten Oberflächen führt. Darüber hinaus wird die Bronzeausrichtung bei Metallic-Lacken verbessert. Die Wasserfestigkeit der erzielten Überzüge ist ausgezeichnet. Bei Verwendung auf dem Kraftfahrzeugsektor erzielt man eine ausgezeichnete Steinschlagbeständigkeit.

Die wasserhaltigen und wasserverdünnbaren Überzugsmittel weisen den Vorteil auf, daß sie nicht vergilben. Sie können sowohl als Basis- als auch als Decklacke verwendet werden. Bevorzugt ist dabei die Verwendung als Basislack, wobei diese Basislacke nach einer Vortrocknung mit einem klaren Decklack überlackiert und dann beide Schichten gemeinsam getrocknet (eingebrannt) werden können. Als klare Decklacke können sowohl die bekannten üblichen lösemittelhaltigen Lacke, z.B. Einkomponenten- und Zweikomponenten-Klarlacke (und hier besonders die Zweikomponenten-High-solid-Typen), als auch wasserverdünnbare Klarlacke eingesetzt werden. Mit den Überzugsmitteln wird auf den verschiedensten Untergründen eine gute Haftung erzielt. Gegenstand der Erfindung ist demgemäß auch die Verwendung der wäßrigen Überzugsmittel zur Herstellung eines Überzuges auf einem Substrat durch Auftrag auf die Oberfläche des Substrats, gegebenenfalls Überschichten mit einem in Wasser oder in organischen Lösemitteln gelösten Klarlack und Erwärmen auf Temperaturen von 60 bis 150°C. Substrate sind die üblichen mit Überzugsmitteln dieser Gattung beschichteten Gegenstände, insbesondere Kraftfahrzeugteile, die auch bereits mit einer Grundierung oder einem Füller beschichtet sein können.

Der Lackauftrag kann nach den üblichen in der Lackindustrie gebräuchlichen Methoden erfolgen, wie z.B. durch Spritzen, Rakeln, Tauchen, Walzen, wobei besonders die Möglichkeit des elektrostatischen Spritzens, wie eingangs erwähnt, auf sogenannten Hochrotationsglocken, zu nennen ist.

Als Substrat sind die verschiedensten Metalle und Metall-Legierungen geeignet wie beispielsweise Eisen oder Stahl, Aluminium, Messing aber auch Kunststoffe und Glas. Der Auftrag kann direkt erfolgen oder, wie in der Autoindustrie üblich, nach Aufbringen einer Kathaphorese-Grundierung und eines Füllers.

Herstellungsbeispiel 1

Herstellung des Bindemittels

A) Polyurethan-Dispersion (Komponente b))

In einem Reaktionsgefäß mit Rührer, Innenthermometer, Rückflußkühler und Heizung werden 1047 g eines linearen Polyesters (aufgebaut aus Adipinsäure, Isophthalsäure und Hexandiol-1.6) mit einer Hydroxylzahl von 135, einer Säurezahl von 1.3 und einer Viskosität von 290 mPa•s (gemessen in 80%iger Lösung in Aceton) nach Zusatz von 98.8 g Dimethylolpropionsäure, in 164 g N-Methylpyrrolidon homogen gelöst. Danach werden bei 45°C 491 g Isophorondiisocyanat zugegeben und nach Abklingen der exothermen Reaktion langsam innerhalb von 2 Stunden auf 80°C erwärmt. Es wird bei dieser Temperatur gehalten, bis der NCO-Gehalt 1.6% beträgt. Unter Verdünnen mit 164 g N-Methyl-Pyrrolidon und 1272 g Aceton wird auf Raumtemperatur abgekühlt und dann schnell hintereinander 66 g Triethylamin und 3038 g vollentsalztes Wasser zugegeben. 5 Minuten nach Zugabe wird das durch Rühren gut dispergierte Harz mit einem Gemisch von 16.4 g Ethylendiamin und 71 g Wasser versetzt und anschließend die Reaktionstemperatur in 2 bis 3 Stunden auf 90°C erhöht, wobei das Aceton, gegebenenfalls unter Vakuum, abdestilliert wird.

Festkörper : 31.4 Gew.-% (30 Min bei 150 °C)
Säurezahl : 28 (mgKOH pro g Festharz)
pH-Wert : 7.8
MEQ-Wert : 33 (Milliäquivalentes Amin pro 100 g Festharz)

B) Umsetzung der Polyurethan-Dispersion mit ethylenisch ungesättigtem Monomeren (Komponente a))

1351 g der oben hergestellten Polyurethan-Dispersion werden mit 364 g vollentsalztem Wasser verdünnt und nach Erwärmen auf 90°C ein Gemisch aus 48.4 g Isobutylacrylat, 58.8 g Hydroxypropylmethacrylat, 14 g Butylacrylat und 157.2 Methylmethacrylat innerhalb von 6 Stunden langsam zugegeben, in das vorher 2 g Azo-bisisobutyronitril aufgelöst wurden. Anschließend wird solange gehalten, bis die Monomeren vollständig auspolymerisiert sind, bzw. gegebenenfalls nachinitiiert. Ein geringer Anteil Koagulat wurde abfiltriert. Das Verhältnis Polyurethan zu Acrylmonomeren beträgt 60 : 40.

Festkörper : 34.6 Gew.-% ( 60 Min 150 °C)
pH-Wert : 7.1
MEQ- Wert : 21
Säurezahl : 17

Herstellung eines hydroxylgruppenhaltigen Polymerisatharzes als Pastenharz zum Anreiben von Pigmenten:

1927 g Butoxyethanol werden in einem Dreihalskolben unter Rückflußkühlung und Inertgas-Atmosphäre auf 120°C erwärmt und dann mit Hilfe eines Tropftrichters innerhalb von 3 Stunden unter gutem Rühren ein Gemisch aus

92 g Methacrylsäure
331 g Hydroxypropylacrylat
462 g Isobutylacrylat
1134 g Methylmethacrylat
34 g Hexandioldiacrylat
14 g tert.-Butyl-peroxy-2-ethoxyhexanoat

unter Halten der Reaktionstemperatur von 120°C langsam zugegeben. Es wird zweimal mit tert.-Butylperoxy-2-ethylhexanoat im Abstand von 2 Stunden nachinitiert und dann das Harz auspolymerisiert. Endwerte:

Festkörper : 51.6 Gew.% (30 Min bei 180 °C)
Säurezahl : 29 mg KOH pro g Festharz
Viskosität : 29 Pa•s bei Festkörper

575 g des hydroxylgruppenhaltigen Polymerisatharzes werden unter Rühren mit 27 g N-Methylmorpholin und 428 g Wasser versehen und 3 Stunden gerührt. Diese Lösung wird 24 Stunden bei Raumtemperatur belassen und, wenn notwendig, mit Methylmorpholin auf einen pH-Wert von 7.3 bis 7.6 eingestellt.

BEISPIEL 1

Herstellung eines Metallic-Basislackes

269 g der in Herstellungsbeispiel B benannten acrylierten Polyurethan-Dispersion werden unter Rühren mit 5 g N-Methylmorpholin und 79 g Butoxyethanol versehen. Anschließend werden 322 g einer 3%igen handelsüblichen Verdickerlösung auf Basis einer Polyacrylatdispersion unter Rühren zugegeben und mit N-Methylmorpholin auf einen pH-Wert zwischen 7.3 und 7.6 eingestellt.

Parallel hierzu werden 40 g einer handelsüblichen Aluminiumbronze mit 65% Aluminiumbestandteil mit einem Gemisch aus 10 g Wasser, 10 g Butoxyethanol, 15 g eines handelsüblichen HMM-Melaminharzes und 75 g des im Herstellungsbeispiel beschriebenen neutralisierten Pastenharzes angeteigt und anschließend unter Rühren in die oben beschriebene Bindemittellösung einfließen gelassen. Unter Rühren (ca.800 U/min) werden anschließend 175 g Wasser langsam zugegeben und schließlich mit Wasser auf eine Spritzviskosität von 30s nach DIN 53211 eingestellt.

BEISPIEL 2

Herstellung einer Tönpaste

498 g des im Herstellungsbeispiel beschriebenen neutralisierten und mit Wasser auf 27% Festkörper verdünnten Pastenharzes werden mit N-Methylmorpholin auf pH 7.6 bis 8.0 eingestellt und mit 50 g eines anorganischen Schwarzpigmentes (Ruß), 337 g vollentsalztem Wasser sowie 9 g N-Methylmorpholin 15 min im Dissolver bei 21 m/sec vordispergiert und anschließend 90 min auf einer Perlmühle bei Temperaturen um 60°C vermahlen. Das Mahlgut wird schließlich mit 96 g Wasser komplettiert. Diese Farbpaste weist eine hohe Transparenz auf und eignet sich hervorragend zum Tönen von wasserverdünnbaren Metallic-und Uni-Basislacken.

BEISPIEL 3

Herstellung eines schwarzen Uni-Basislackes

410 g der in Herstellungsbeispiel B benannten acrylierten Polyurethan-Dispersion werden unter Rühren mit 6.7 g N-Methylmorpholin und anschließend mit 364 g einer 3%igen handelsüblichen Verdickerlösung auf Basis einer Polyacrylatdispersion versehen. Nach 15 min Rühren werden 208 g der in Beispiel 2 beschriebenen schwarzen Tönpaste sowie 52 g Butoxyethanol zugegeben. Mit Wasser wird schließlich auf eine Spritzviskosität von 30 s nach DIN 53211 eingestellt.

BEISPIEL 4

Lackaufbau

Auf ein zinkphosphatiertes Karosserieblech, das mit einem Elektrotauchgrund und einem Füller lackiert wurde, werden mit einer Fließbecherpistole soviel des nach Beispiel 1 oder 3 beschriebenen Metallic-Basislackes bzw. Uni-Basislackes aufgebracht, daß nach dem Trocknen von 5 min bei 20°C und zusätzlich 5 min bei 80°C eine Trokkenfilmstärke von etwa 15 um verbleibt. Danach wird mit einem handelsüblichen Klarlack (z.B. Zweikomponentenlack, High-solid) überlackiert und 30 min bei 130 C eingebrannt. Die Trockenfilmstärke des Klarlackes beträgt ca. 40 µm. Die so erhaltene Lackoberfläche weist einen feinen gleichmäßigen hellen Metalleffekt auf. Der Lackfilm wird bis zum Füller mit einem feinen Messer mit dem sogenannten Leiterschnitt versehen und achtmal nach der sogenannten Klebebandabrißmethode getestet. Es wird kein Haftungsverlust vermerkt. Eine weitere, wie oben beschrieben, hergestellte Testplatte wird 120 Stunden in 40°C warmem Wasser gelagert. Nach einer Rekonditionierungsphase von 1 Stunde ist der Lackfilm frei von Blasen, ohne Kräuselung und ohne Vermattung.

Vergleichsversuch: (mit einer Polymerdispersion, deren Säurezahl unter 12 liegt)

884 g einer handelsüblichen Polyurethan-Dispersion mit einer Säurezahl von etwa 25, die einen OH-Polyester enthält, werden nach Verdünnen mit 691 g vollentsalztem Wasser auf 80°C erwärmt und ein Gemisch aus 71.8 g Butylacrylat, 87.4 g Hydroxyethylacrylat, 12.8 g Isobutylacrylat, 241.8 g Methylmethacrylat und 10.4 g tert.-Butyl-peroxy-2-ethylhexanoat wird innerhalb von 3 Stunden zugegeben. Der Ansatz dickt ein und bildet griesähnliche Koagulate an Rührer und Wandungen.
(Gew.-Verhältnis, Polyurethan : Monomer - 43 : 57)

Herstellungsbeispiel 2:

A. Polyurethan-Dispersion

In einem Reaktionsgefäß mit Rührer, Innenthermometer, Rückflußkühler und Heizung werden 410 g eines lineraren Poiyesters (aufgebaut aus Adipinsäure, Isophthalsäure, Hexandiol-1.6) mit einer Hydroxylzahl 135, und einer Viskosität von 190 mPas (gemessen in 80 %iger Lösung in Aceton) nach Zusatz von 40.2 g Dimethylolpropionsäure in 69 g N-Methylpyrrolidon homogen gelöst. Danach werden bei 45°C 222g Isophorondiisocyanat langsam zugegeben, wobei die Reaktionstemperatur auf bis zu 80°C ansteigt. Es wird diese Temperatur gehalten bis der NCO-Gehalt 2.6 % beträgt. Unter Verdünnen mit 69 g N-Methylpyrrolidon und 484 g Aceton wird bis auf Raumtemperatur abgekühlt. Dann wird eine Lösung von 67 g Isocyanurat des Isophorondiisocyanats in 67 g Aceton eingerührt. Nach Zusatz von 30 g Triethylamin wird das Harz in 1123 g vollentsalztem Wasser dispergiert und ein Gemisch von 12.6 g Ethylendiamin und 405 g Wasser schnell zugegeben. Anschließend wird die Reaktionstemperatur in 2 bis 3 Stunden auf 90°C erhöht, wobei das Aceton, gegebenenfalls unter Vakuum abdestilliert wird.

Festkörper: 31.6 Gew.-% (30min 150 C)
Säurezahl: 25 (mg KOH pro g Festharz)
pH-Wert: 7.6
MEQ-Wert: 34 (mÄquiv. Amin pro 100 g Harz)

B. Umsetzung der Polyurethan-Dispersion mit ethylenisch ungesättigten Monomeren

In 334 g der eben hergestellten Dispersion A), die mit 220 g vollentsalztem Wasser und 0.4 g Trieethylamin verdünnt wird, werden 139 g Methylmethacrylat, 69 g Hydroxyethylacrylat, 69 g Butylacrylat und 7 g Azo-bis-isobutyronitril emulgiert. Man erhält eine Monomeren-Emulsion. 1002 g der Polyurethan-Dispersion A) werden mit 150 g vollentsalztem Wasser in der Vorlage verdünnt und danach 10 % der Monomeren-Emulsion und 0.7 g Azo-bis-isobutyronitril zugegeben. Nach Erwärmen auf 80 °C wird innerhalb von 2.5 Stunden die restliche Monomeren-Emulsion zugegeben und anschließend solange gehalten, bis die Monomeren, gegebenenfalls unter Nachinitiierung vollständig auspolymerisiert sind. Es entsteht eine stabile Dispersion, die keine Koagulationserscheinungen zeigt.

Festkörper: 34.8 Gew.-% (60 min 150°C)
pH-Wert: 7.4
Säurezahl: 16
MEQ-Wert: 22

Verhältnis Polyurethan : Monomer: 60 : 40
Mittlere Teilchengröße: 166nm

Herstellungsbeispiel 3:

A. Polyurethan-Dispersion

In einem Reaktionsgefäß mit Rührer, Innenthermometer, Rückflußkühler und elektrischer Heizung werden 743 g eines linearen Polyesters (aufgebaut aus Azelainsäure, Isophthalsäure und Hexandiol-1.6) mit einer Hydroxylzahl von 110 und einer Viskosität von 210 mPas (gemessen 80 %ig in Aceton) nach Zusatz von 178 g Dimethylolpropionsäure in 149 g N-Methylpyrrolidon homogen gelöst. Danach werden bei 45°C 535 g Isophorondiisocyanat zugegeben und nach Abklingen der exothermen Reaktion langsam innerhalb von 2 Stunden auf 80°C erwärmt. Es wird bei dieser Temperatur gehalten. bis der NCO-Gehalt 2.2 % beträgt. Unter Verdünnen mit 149 g N-Methylpyrrolidon und 1046 g Aceton wird auf Raumtemperatur abgekühlt und dann schnell hintereinander 124 g Triethylamin und 2034 g vollentsalztes Wasser zugegeben. nach 5 Minuten wird in das gut dispergierte Harz ein Gemisch von 19 g Ethylendiamin und 700 g Wasser zugesetzt. Anschließend wird die Reaktionstemperatur in 2 bis 3 Stunden auf 90°C erhöht, wobei das Aceton, gegebenenfalls unter Vakuum abdestilliert wird.

Festkörper: 32.4 Gew.-% (30 min bei 150 °C)
Säurezahl: 50 (mg KOH pro g Festharz)
pH-Wert: 7.3
MEQ-Wert: 77

A. Polyurethan-Dispersion

In einem Reaktionsgefäß mit Rührer, Innenthermometer, Rückflußkühler und elektrischer Heizung werden 743 g eines linearen Polyesters (aufgebaut aus Azelainsäure, Isophthalsäure und Hexandiol-1.6) mit einer Hydroxylzahl von 110 und einer Viskosität von 210 mPas (gemessen 80 %ig in Aceton) nach Zusatz von 178 g Dimethylolpropionsäure in 149 g N-Methylpyrrolidon homogen gelöst. Danach werden bei 45°C 535 g Isophorondiisocyanat zugegeben und nach Abklingen der exothermen Reaktion langsam innerhalb von 2 Stunden auf 80°C erwärmt. Es wird bei dieser Temperatur gehalten, bis der NCO-Gehalt 2.2 % beträgt. Unter Verdünnen mit 149 g N-Methylpyrrolidon und 1046 g Aceton wird auf Raumtemperatur abgekühlt und dann schnell hintereinander 124 g Triethylamin und 2034 g vollentsalztes Wasser zugegeben. nach 5 Minuten wird in das gut dispergierte Harz ein Gemisch von 19 g Ethylendiamin und 700 g Wasser zugesetzt. Anschließend wird die Reaktionstemperatur in 2 bis 3 Stunden auf 90°C erhöht, wobei das Aceton, gegebenenfalls unter Vakuum abdestilliert wird.

Festkörper: 32.4 Gew.-% (30 min bei 150°C)
Säurezahl: 50 (mg KOH pro g Festharz)
pH-Wert: 7.3
MEQ-Wert: 77

B. Umsetzung der Polyurethan-Dispersion mit ethylenisch ungesättigten Monomeren

In 160 g der Polyurethan-Dispersion A) gemischt mit 283 g vollentsalztem Wasser und 0,8 g Trieethylamin werden 138 g Styrol. 138 g Methylmethacrylat, 103 g Hydroxyethylacrylat, 103 g Butylacrylat und 12.2 g Azo-bis-isobutyronitril emulgiert. Man erhält eine Monomeren-Emulsion. 479 g der oben hergestellten Polyurethan-Dispersion A) werden mit 566 g vollentsalztem Wasser in der Vorlage verdünnt und 10 % der Monomeren-Emulsion und 1.2 g Azo-bis-isobutyronitril zugegeben. Nach Erwärmen auf 80 C wird innerhalb von 3 Stunden die restliche Monomeren-Emulsion zugegeben und anschließend solange gehalten, bis die Monomeren gegebenenfalls unter Nachinitiierung vollständig auspolymerisiert sind. Es entsteht eine stabile Dispersion, die gut filtrierbar ist und keine Koagulate zeigt.

Festkörper: 34,2 Gew.-% (60 min 150°C)
pH-Wert: 6.9
MEQ-Wert: 22
Verhältnis PU : Monomer: 30 : 70
Mittlere Teilchengröße: 90 nm
(gemessen durch Photonen-Relaxations-Spektroskopie)

Beispiel 5:

Mit der vorstehend in Herstellungsbeispiel 2 erhaltenen Polyurethandispersion wurde, wie in Beispiel 1 beschrieben, ein Metallic-Basislack hergestellt, der zu guten Metalleffekten führte.

**Patentansprüche**

1. Verfahren zur Herstellung eines Mehrschichtüberzuges, bei dem auf ein Substrat ein gesättigtes Basisüberzugsmittel aus einer wäßrigen Dispersion eines nicht-vernetzten Polymeren aufgebracht wird, dadurch gekennzeichnet, daß die wäßrige Dispersion Teilchendurchmesser der polymeren Phase von 10 nm bis 500 nm aufweist, das Polymere eine zahlenmittlere Molmasse von 10000 bis 500000 und eine Säurezahl von 12 bis 40 aufweist, und die Dispersion erhalten wurde durch Polymerisation ohne Emulgatorzusatz und in Anwesenheit von nicht-wasserlöslichen Initiatoren, von

   a) 0.65-g Gewichtstellen einer Monomerenmischung aus 28-90 Gew.% carboxylgruppenfreien ungesättigten Monomeren, die außer der ungasättigten Bindung keine weiteren unter Polymerisations- und Härtungsbedingungen reaktiven Gruppen enthalten, 10-85 Gew.% einpolymerisierbaren hydroxylgruppenhaltigen Monomeren der allgemeinen Formel R"-CH = CR'-X-R'" worin

      R' = H oder $-C_nH_{2n+1}$ ;
      R" = -R' oder $-COOC_nH_{2n+1}$,
      n = 1 bis 6,
      R'" = eine lineare oder verzweigte $C_{1-6}$-Alkylgruppe mit 1 bis 3 OH-Gruppen; und
      X = -COO-, -CONH-; $-CH_2$-O- oder -O-;

   und 0 - 7 Gew.% ethylenisch polyungesättigten Monomeren, in
   b) 1 Gewichtsteil, bezogen auf den Harzanteil, einer wäßrigen Dispersion eines harnstoffgruppenhaltigen Polyurethans, die durch Kettenverlängerung eines NCO-Gruppen enthaltenden Prepolymeren auf Polyesterbasis mit einem NCO-Gruppen-Gehalt von 1,0 bis 10 % mit mindestens zwei Urethangruppen pro Molekül, mit Carboxylgruppen entsprechend einer Säurezahl von 20 - 50 und einer zahlenmittleren Molmasse von 600 bis 6000, mit einem Polyamin mit primären und/oder sekundären Aminogruppen und/oder mit Hydrazin in wäßrigem Medium ohne Emulgatorzusatz hergestellt wurde,

   und gegebenenfalls anschließenden Zusatz von Pigmenten, Füllstoffen, Lösemitteln, Verdickungsmitteln und/oder übilchen Lackhilfsmitteln und Zusatzstoffen, der so erhaltenen Basisüberzug abgelüftet, ein wasserverdünnbares oder in organischen Lösemitteln gelöstet transparentes Überzugsmittel aufgebracht und anschließend das so beschichtete Substrat einer Erwärmung bei Temperaturen bis zu 140°C unterworfen wird.

2. Verfahren nach Anspruch 1, dadurch gekennzeichnet, daß 1 bis 5 Gewichtsteile der Komponente a) pro ein Gewichtsteil der Komponente b) verwendet werden.

3. Verfahren nach Anspruch 1 cder 2, dadurch gekennzeichnet, daß die Säurezahl des Polymeren in der wäßrigen Dispersion 15 bis 30 beträgt.

4. Verfahren nach Anspruch 1, 2 oder 3, dadurch gekennzeichnet, daß die Säurezahl der Komponente b) 25 bis 50 beträgt.

5. Verfahren nach einem der Ansprüche 1 bis 4, dadurch gekennzeichnet, daß als carboxylgruppenfreies ungesättigtes Monomeres der Komponente a) Styrol, Styrolderivate und/oder (Meth)acrylderivate vorwendet werden.

6. Verfahren nach einem der Ansprüche 1 bis 5, dadurch gekennzeichnet, daß bei der Herstellung der wäßrigen Dispersion des harnstoffgruppenhaltigen Polyurethans b) vor oder nach der Kettenverlängerung des NCO-Gruppen enthaltenden Prepolymeren, Polyisocyanate mit mehr als zwei NCO-Gruppen zugesetzt werden.

7. Verfahren nach einem der Ansprüche 1 bis 6, dadurch gekennzeichnet, daß bei der Herstellung der wäßrigen Dispersion des harnstoffgruppenhaltigen Polyurethans b) Polyamine in einer derartigen Menge zugesetzt werden, daß das Verhältnis der reaktiven Aminogruppen zu den NCO-Gruppen geringer als oder gleich 1 : 1 ist und bevorzugt im Bereich von 1 : 1 bis 0,5 : 1 liegt.

## Claims

1. A method of producing a multi-layer coating in which a saturated base coating comprising an aqueous dispersion of a not cross-linked polymer is applied to a substrate, characterised in that the aqueous dispersion has a polymer-phase particle diameter of 10 nm to 500 nm, the polymer has a numerical average molecular weight of 10,000 to 500,000 and an acid number of 12 to 40 and the dispersion is obtained by polymerisation, without adding an emulsifier and in the presence of water-insoluble initiators, of

   a) 0.65 - 9 parts by weight of a mixture of 28 - 90 wt.% of unsaturated monomers free from carboxyl groups and, apart from the unsaturated bond, not containing any groups which are reactive under the polymerisation and curing conditions, 10 - 65 wt.% of polymerisable monomers containing hydroxyl groups and having the general formula

   $$R''\text{-}CH{=}CR'\text{-}X\text{-}R'''$$

   in which

   $R'$=-H or $-C_nH_{2n+1}$;
   $R''$=-R' or $-COOC_nH_{2n+1}$;
   n = 1 to 6,
   $R'''$= a straight-chain or branched $C_{1\text{-}6}$ alkyl group with 1 to 3 OH groups, and
   X = -COO-, -CONH-, $-CH_2$-O- or -O-;

   and 0 - 7 wt.% of ethylenically polyunsaturated monomers, in
   b) 1 part by weight, relative to the resin content, of an aqueous dispersion of a polyurethane containing urea groups and prepared by prolonging the chain of a polyester-based prepolymer containing NCO groups and with an NCO group content of 1.0 to 10% with at least two urethane groups per molecule, with carboxyl groups corresponding to an acid number of 20 - 50 and a numerical average molecular weight of 600 - 6000, with a polyamine with primary and/or secondary amino groups and/or with hydrazine in an aqueous medium without addition of emulsifier,

   optionally followed by addition of pigments, fillers, solvents, thickening agents and/or conventional lacquer adjuvants and additives,
   the resulting base coating is vented, a transparent coating agent which is dilutable in water or dissolved in organic solvents is applied and the thus-coated substrate is then heated at temperatures up to 140°C.

2. A method according to claim 1, characterised in that 1 to 5 parts by weight of component a) are used for each part by weight of component b).

3. A method according to claim 1 or 2, characterised in that the acid number of the polymer in the aqueous dispersion is 15 to 30.

4. A method according to claim 1, 2 or 3, characterised in that the acid number of component b) is 25-50.

5. A method according to any of claims 1-4, characterised in that styrene, styrene derivatives and/or (meth)acrylic derivatives are used as the unsaturated monomer, free from carboxyl groups in component a).

6. A method according to any of claims 1-5, characterised in that polyisocyanates with more than two NCO groups are added during manufacture of the aqueous dispersion of the urea group-containing polyurethane b) before or after prolongation of the chain of the prepolymer containing NCO groups.

7. A method according to claims 1-6, characterised in that during manufacture of the aqueous dispersion of the urea group-containing polyurethane b), polyamines are added in a quantity such that the ratio of the reactive amino groups to the NCO groups is less than or equal to 1:1 and is preferably in the range from 1:1 to 0.5:1.

**Revendications**

1. Procédé pour la production d'un revêtement multi-couche, dans lequel est appliqué sur un substrat un agent de revêtement de base saturé formé d'une dispersion aqueuse d'un polymère non-réticulé, caractérisé en ce que la dispersion aqueuse présente des diamètres de particules de la phase polymère de 10 nm à 500 nm, le polymère présente une masse molaire moyenne en nombre de 10000 à 500000 et un indice d'acide de 12 à 40, et la dispersion a été obtenue par polymérisation sans addition d'émulsifiant et en présence d'initiateurs non-hydrosolubles de

   a) 0,65 - 9 parties en poids d'un mélange de monomères composé de 28 - 90% en poids de monomères insaturés exempts de groupes carboxyle, qui en dehors de l' insaturation ne contiennent pas d'autres groupes réactifs dans les conditions de polymérisation et de durcissement, 10-65% en poids de monomères copolymérisables, contenant des groupes hydroxyle, de formule générale R"-CH=CR'-X-R'"
   où

      R' = -H ou $-C_nH_{2n+1}$;
      R" = -R' ou $-COOC_nH_{2n+1}$ ;
      n = 1 à 6;
      R"' = un groupe alkyle en $C_{1-6}$ linéaire ou ramifié, ayant 1 à 3 groupes OH; et
      X = -COO-, -CONH-, $-CH_2$-O- ou -O-;

   et 0-7% en poids de monomères éthyléniquement polyinsaturés, dans
   b) 1 partie en poids, par rapport à la fraction de résine, d'une dispersion aqueuse d'un polyuréthane contenant des groupes urée, qui a été préparée par allongement de chaînes d'un prépolymère contenant des groupes NCO sur la base d'un polyester ayant une teneur en groupes NCO de 1,0 à 10% avec au moins deux groupes uréthane par molécule, avec des groupes carboxyle correspondant à un indice d'acide de 20-50 et une masse molaire moyenne en nombre de 600 à 6000, avec une polyamine ayant des groupes amino primaires et/ou secondaires et/ou avec de l'hydrazine dans un milieu aqueux sans addition d'émulsifiant,

   et éventuellement addition subséquente de pigments, de charges, de solvants, d'épaississants et/ou d' adjuvants classiques pour laques et d'additifs,
   on évacue l'air du revêtement de base ainsi obtenu, on applique un revêtement transparent diluable à l'eau ou dissous dans des solvants organiques et ensuite on soumet le substrat revêtu à un chauffage à des températures allant jusqu'à 140°C.

2. Procédé selon la revendication 1, caractérisé en ce qu'on utilise 1 à 5 parties en poids du constituant a) par partie en poids de constituant b).

3. Procédé selon l'une des revendications 1 ou 2, caractérisé en ce que l'indice d'acide du polymère dans la dispersion aqueuse est de 15 à 30.

4. Procédé selon l'une quelconque des revendications 1, 2 ou 3, caractérisé en ce que l'indice d'acide du constituant b) est de 25 à 50.

5. Procédé selon l'une quelconque des revendications 1 à 4, caractérisé en ce qu'on utilise comme monomère insaturé exempt de groupes carboxyle du constituant a) du styrène, des dérivés de styrène et/ou des dérivés (méth)-acryliques.

6. Procédé selon l'une quelconque des revendications 1 à 5, caractérisé en ce que dans la préparation de la dispersion aqueuse du polyuréthane b) contenant des groupes urée, avant ou après l'allongement de chaînes du prépolymère contenant des groupes NCO, on ajoute des polyisocyanates ayant plus de deux groupes NCO.

7. Procédé selon l'une quelconque des revendications 1 à 6, caractérisé en ce que dans la préparation de la dispersion aqueuse du polyuréthane b) contenant des groupes urée on ajoute des polyamines en une quantité telle que le rapport des groupes amino réactifs aux groupes NCO soit inférieur à ou égal à 1 : 1 et soit de préférence compris entre 1 : 1 et 0,5 : 1.